# EUROPEAN PATENT APPLICATION

(11) **EP 4 227 162 A1**
(43) Date of publication of application: **16.08.2023**
(21) Application number: 23156209.1
(22) Date of filing: 13.02.2023
(51) Int. Cl.: B60R 9/045, B60R 9/058

(54) **CLAMPING DEVICE AND RELATIVE SYSTEM FOR CONNECTING AT LEAST ONE BAR OR AT LEAST ONE ACCESSORY**

(30) Priority: 15.02.2022 IT 202200002714
(71) Applicant: F.LLI MENABO' S.R.L., 42025 Cavriago (Reggio Emilia) (IT)
(72) Inventor: SALSI, Andrea, 42011 BAGNOLO IN PIANO (REGGIO EMILIA) (IT)
(74) Representative: Paparo, Aldo

(57) **Abstract**

Clamping device 1, to promote the locking of a bar 101 to a vehicle or an accessory 110 to a vehicle, comprising a bolt 2, provided with a shank 3 and a locking head 4, the latter connected to a prismatic guide 102, connectable to an auxiliary body 5. The device 1 further comprises a movable actuating element 6, which is movable following a command given by an operator, from a rest position, in which the bolt 2 and auxiliary body 5 are in a contact relationship, to an operating position, in which the bolt 2 and auxiliary body 5 are locked together. The device 1 further includes an adjustment bushing 7, coupled to the bolt 2, adapted to impart a translation of the actuating element 6 towards the auxiliary body 5. Said adjustment bushing 7 allowing a preliminary adjustment of the position of the actuating element 6 with respect to the auxiliary body 5 prior to the movement of the actuating element 6 from the rest position to the operating position.

## Description

The present invention relates to a clamping device to promote the locking of a bar to a vehicle or to promote the locking of an accessory to a vehicle. A further object of the present invention is a connection system for connecting at least one bar through a pair of clamping elements and a connection system for connecting an accessory through a pair of clamping devices.

The present invention finds application in the field of automotive accessories, but could be extensively translated to any application requiring a clamping device for fixing a first element to a second element. Within the field of application of the present invention, the first element is preferably a bar and the second element is preferably a vehicle body part, for example the roof of a vehicle or the cargo bed of a pick-up truck, or the first element can be an accessory and the second element can be a vehicle body part or a connecting bar thereto.

In the following of the present description, the field of automotive accessories will tend to be preferred, carrying out some application examples relevant to the aforementioned sector.

In the automotive field, several accessories exist to allow a user to arrange further loading space beyond that provided by the boot, or more generally the loading compartment, inside or outside the driver's cab.

To cite some examples, accessories exist such as bicycle racks, boots or luggage racks, ski racks or accessories for transporting other sports equipment of large size (such as a surfboard). The aforementioned accessories, provided as an indicative and non-limiting list, will be defined more generally below as an accessory for transport.

The accessory for transport must be connected to the vehicle body and to do this, a pair of bars connected to clamping devices is generally used. That is, the pair of bars is arranged with a spaced and parallel orientation, and the accessory for transport is connected above them. To achieve a safe and simple connection during assembly and disassembly, the system includes a first clamping group to connect the bars to the vehicle body and a second clamping group to connect the accessory for transport to the bars (in some cases it is possible to actuate the two connections with a single clamping group).

Since these systems must meet strict safety standards, to prevent the accessory for transport from being released during the travel of the vehicle, over time some components defining the clamping system(s) have been standardised.

One of the most popular systems includes a cam lever connected to a screw.

The screw is generally engaged inside a seat, obtained on a body or on a guide applied, connected or integrated in a vehicle, and can be rotated by the lever.

Through the rotation of the lever, the screw is screwed so as to reach the abutment cam on the elements to be clamped and then by rotating the lever, the cam is actuated to perform the final clamping.

This system is not lacking disadvantages.

A first disadvantage is linked to the lack of indications related to the height of screwing the screw. If the screw is poorly screwed, the operator is capable of independently verifying an incomplete clamping because when the lever is activated, the cam does not apply any pressure, or any clamping on the elements which are to be made integral.

Conversely, if the screw is screwed too much, the operator can complete the clamping procedure, applying however an overly high pressure with the cam, with the risk of compromising the clamping reliability actuated by the cam itself in the long run.

A further disadvantage is linked to the positioning of the lever when it reaches the clamping position. Both to obtain a compact system and to hide the lever from unwanted accessibility, such as by vandals or thieves, the lever, having reached the closing position, is generally bent either inside a compartment or inside an extruded profile with a U-shaped cross section.

If the lever has not precisely reached a specific position, when bent to activate the cam, the same can hit a wall of the compartment or the profile and not complete the closure of the cam. In this circumstance, to adjust the position of the lever, the operator can further screw the screw, then applying, upon the next closing of the lever, an overly high clamping pressure, or the operator can unscrew the screw, compromising the subsequent clamping effectiveness of the cam.

A correct approach to the problem should envisage the complete disassembly of the clamping system to reassemble it with an initial engagement position, of the lever on the screw, which is different from the one previously made. Following this approach, it is immediately understood how fixing the accessory for transport can become a particularly long and laborious operation.

Finally, it must be added that generally the positioning of the clamping devices, with respect to the accessory for transport and the vehicle body, does not occur in easy-to-access areas and therefore whenever the operator must assemble the devices, he has difficulty viewing the screwing state of the screw and final positioning of the clamping lever.

In this context, the technical task underlying the present invention is to propose a clamping device and relative connection system of at least one bar or at least one accessory.

In particular, it is an object of the present invention to provide a clamping device and a connection system for at least one bar or at least one accessory to a vehicle which is easy to assemble and simple to correct in the event of incorrect assembly.

A further object of the present invention is to provide a clamping device for a bar or for an accessory which allows an easy adjustment of the final position of the elements forming the clamping device.

Still, a further object of the present invention is to provide a clamping device for a bar or for an accessory which allows to actuate a complete clamping of the device, dividing the procedure with a preliminary adjustment step and a subsequent locking step.

The defined technical task and the specified aims are substantially achieved by a clamping element and relative connection system comprising the technical features set forth in one or more of the appended claims.

The dependent claims correspond to possible embodiments of the invention.

Further features and advantages of the present invention will become more apparent from the indicative and thus non-limiting description of a preferred but non-exclusive embodiment of a clamping device and relative connection system, as illustrated in the appended drawings, in which:
- figure 1 illustrates an exploded perspective view of a clamping device and an exploded and partial perspective view of a connection system in accordance with the present invention.
- figure 2 illustrates in perspective view the clamping device of figure 1 in a first assembly configuration.
- figure 3 illustrates in perspective view the clamping device of figure 1 in a second assembly configuration.
- figure 4 illustrates in perspective view, with some parts sectioned to better illustrate others, the device of figure 1 in a third assembly configuration.
- figure 5 illustrates in perspective view the clamping device in the transient of figure 4.
- figure 6 illustrates in exploded view the clamping device of figure 1 together with some components of the connection system.
- figure 7 illustrates a perspective view of a double connection system for bars for vehicles provided with a plurality of clamping devices.
- figure 8 illustrates a cross section of a component of the connection system for bars for vehicles.
- figure 9 illustrates in perspective view a connection system for an accessory provided with a plurality of clamping devices.
- figure 10 illustrates, in perspective view, the connection system of figure 9 for an accessory with some parts removed to better illustrate the clamping devices.
- figure 11 illustrates, in a bottom perspective view, the connection system of figure 9.
- figures 12-14 illustrate in partial perspective view the connection system of figure 9 in three operating transients of a clamping device.

With reference to the appended drawings, a clamping device has been indicated in its entirety with the reference number 1, and with 100 a connection system of at least one bar or at least one accessory in accordance with the present invention.

The clamping device 1 allows the locking of at least one bar 101 to a roof of a vehicle or to a cargo bed of a pick-up truck, or allows the locking of at least one accessory 110 to a prismatic guide 102 or to a bar 101. In particular, in the case of fixing the accessory 110, the clamping device acts between the accessory 110 and the prismatic guide 102, the latter preferably being obtained inside the bar 101.

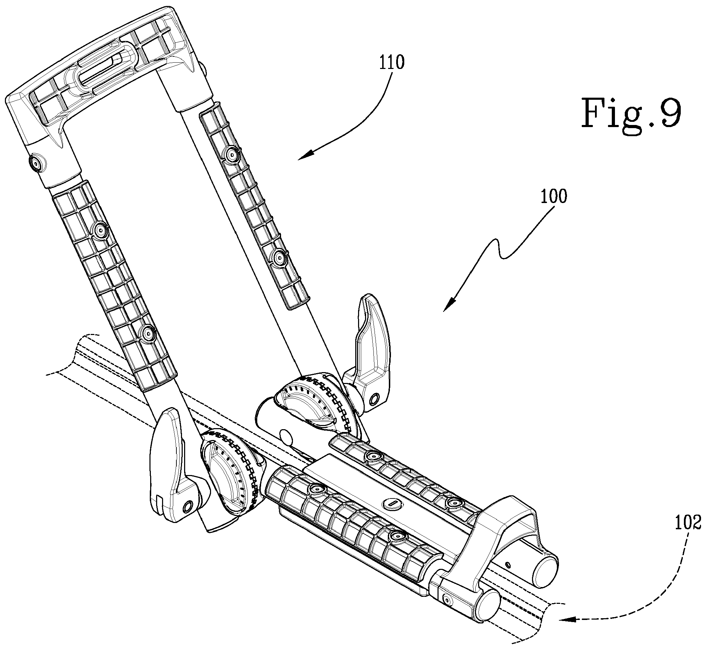

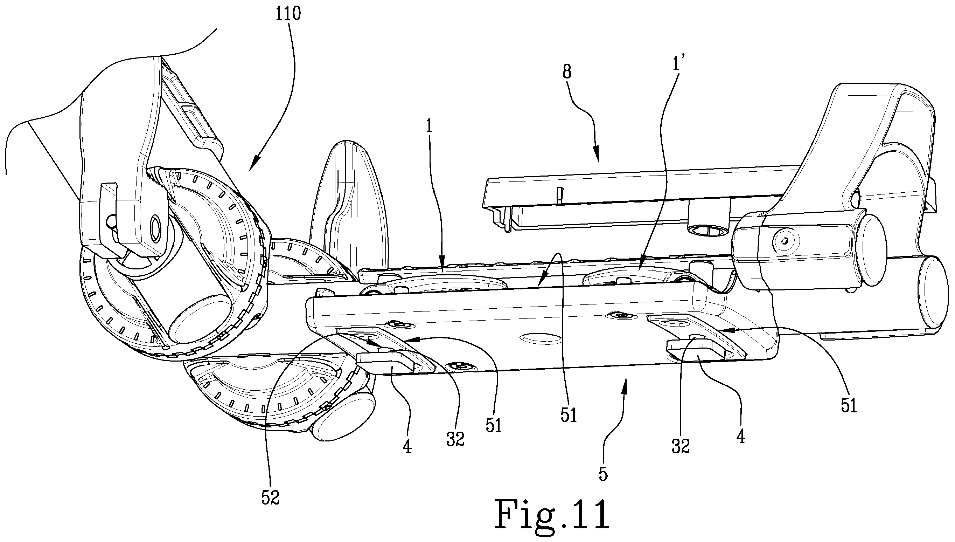

Accessory 110 is intended as various devices known in the market used to temporarily connect sports equipment to a vehicle. To cite some examples, the accessory 110 can be a ski rack, a bicycle rack, a kayak rack (as illustrated in figures 9-14), a windsurfing board rack, a canoe rack and more extensively any other element which allows the transport of an object on a vehicle outside the body thereof.

Said clamping device 1 comprises several components, including a bolt 2, an auxiliary body 5, an actuating element 6 and an adjustment bushing 7. The bolt 2 extends along a first axis Y-Y and in use, is located in a vertical position, i.e., with the first axis Y-Y vertical.

Said bolt 2 is defined by a shank 3 provided with a first free end 31 and a second end 32 to which a locking head 4 is connected. Said shank 3, downstream of the locking head 4 and along the first axis Y-Y, is preferably threaded.

As can be seen in the appended drawings, the locking head 4 preferably has a parallelepiped shape but, without departing from the scope of protection of the present invention, can assume any shaped shape. For example, the locking head 4 can assume the shape of a hexagonal head or the form of a pin with transverse axis with respect to the extension axis of the bolt 2. In all the embodiments of the locking head 4, it is arranged to be coupled inside a prismatic guide 102, the latter having a main extension along a second axis X-X and a groove 103 within which the locking head 4 is coupled. The prismatic guide 102 can be obtained directly on a vehicle or made inside a bar 101 as will be better explained below.

The coupling between locking head 4 and prismatic guide 102 is such as to allow a sliding of the head 4 inside the groove 103, along the second axis X-X, and to inhibit a rotation of the head 4, inside the groove 103, around the axis Y-Y.

The bolt 2 passes through an auxiliary body 5 adapted to house the clamping device 1, as will be better described below.

The auxiliary body 5, connectable to the bar 101, has a base surface 51 having a hole 52 engageable by the shank 3. Through the actuation of the clamping device 1, the base surface 51 is lockable to the prismatic guide 102 according to a manner which will be described in more detail below. With particular reference to the auxiliary body 5, this can assume the guise of a box-like body 50 enclosing part of the clamping device 1 therein, or it can assume the guise of a support body, interacting with the clamping device 1 and connectable to the bar 101.

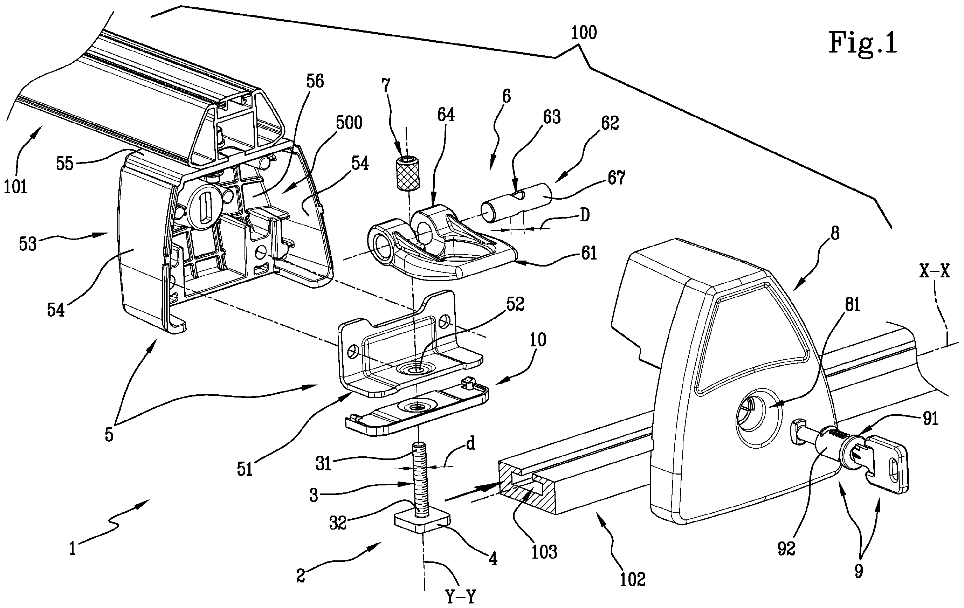

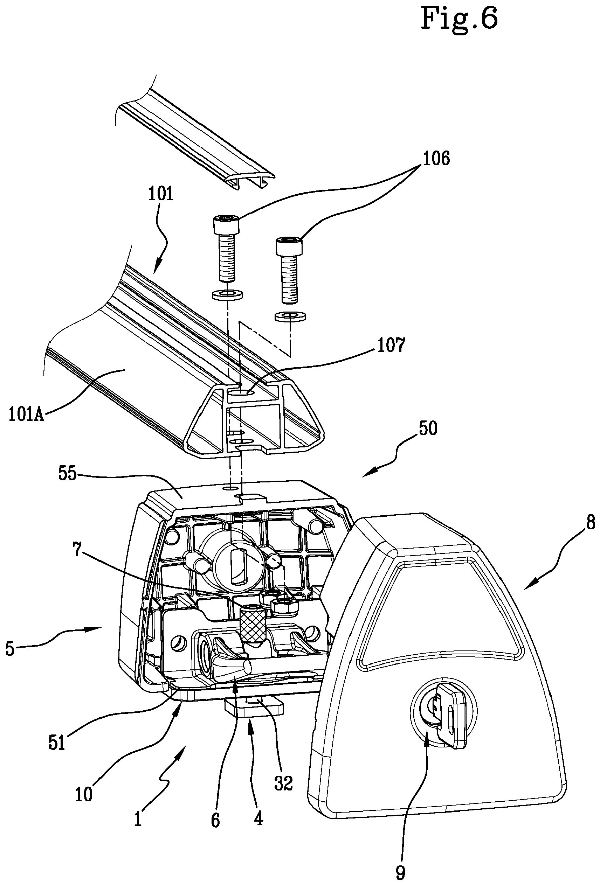

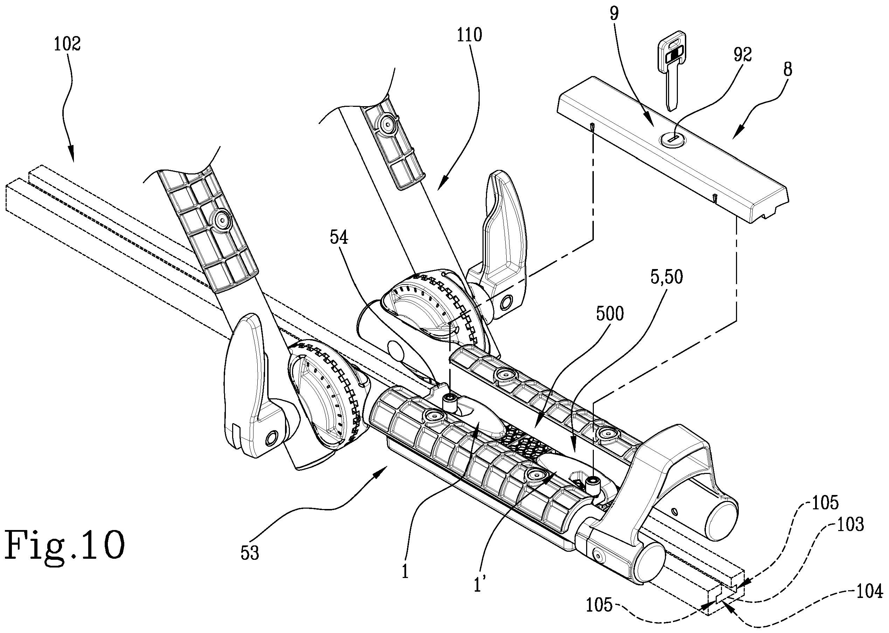

As illustrated in figures 1-6 and in figure 10, the box-like body 50 comprises a shell 53 couplable to a closing casing 8. As illustrated in figures 1-6, the shell 53 defines a compartment 500 therein delimited at the rear by a bottom surface 56, below by the base surface 51, laterally by a pair of side walls 54 and above by a top surface 55. That is, the base surface 51, pair of side walls 54 and top surface 55 together define a frame body closed by a side with the bottom surface 56.

The box-like body 50, open on the side opposite that where the bottom surface 56 is present, is couplable to a closing casing 8, having a shape counter-shaped to that of the shell 53, so as to close the compartment 500. As illustrated in figure 10, the shell 53 defines a compartment 500 therein open above and delimited laterally by a pair of side walls 54 and below by a base surface 51. Therefore, the shell 53 is open on the side opposite that where the base surface 51 is present and closable by the closing casing 8. The base surface 51, on the side opposite that facing the closing casing 8, is arranged to come into contact with a prismatic guide 102.

The clamping device 1 further comprises an actuating element 6 for moving the clamping device 1 from a rest position to an operating position and vice versa.

That is, the actuating element 6 is movable, following a command given by an operator, from a rest position, in which the bolt 2 and the auxiliary body 5 are in a contact relationship, to an operating position, in which the bolt 2 and the auxiliary body 5 are locked together. The movement of the actuating element 6 is reversible from the rest position to the operating position and vice versa. In particular, in the rest position, the contact relationship is reached due to the weight of the bar 101 weighing on the auxiliary body and indirectly on the prismatic guide 102. In such a position, the bolt 2 is fitted on the hole 52 of the auxiliary body 5.

That is, in the rest position, gravity is the only force that engages the bolt 2 and auxiliary body 5. In detail, as can be seen in the appended figures 1-8, the bar 101 exerts the sole weight force directly on the auxiliary body 5 and, consequently, on the prismatic guide 102 to which the locking head 4 is coupled.

As can be seen in the appended figures 9-14, the accessory 110 exerts the sole weight force directly on the auxiliary body 5 and consequently on the prismatic guide 102 to which the locking head 4 is coupled.

The actuating element 6 is articulated in three elements: an upper actuating portion 61, graspable by the operator to bring the actuating element 6 from the rest position to the operating position and vice versa, a connecting element 62, integral with the upper actuating portion 61 and having a through hole 63, arranged transversely with respect to the connecting element 62, crossed by the shank 3, and a lower cam portion 64, activatable on the base surface 52 and rotatable around the connecting element 62 to promote a clamping between the locking head 4 and auxiliary body 5 when the upper actuating portion 61 is brought into the operating position. As can be seen in the appended drawings, the actuating portion 6, when moved from the rest position to the operating position, rotates by at least 45°, preferably 90°, around the connecting element 62. It can also be seen from the figures how the upper actuating portion 61 in the rest position lies substantially horizontal or vertical and in the operating position lies substantially vertical or horizontal, i.e., rotated by about 90 degrees with respect to the previous position assumed. It is understood that, without departing from the scope of protection of the present invention, the upper actuating portion 61 can have, in the rest and operating positions, any orientation, even inverted with respect to that depicted in the appended drawings. As will be further detailed in the following paragraphs, the fixing of the bar 101 or the accessory 110 to the prismatic guide 102 by means of the auxiliary body 5 occurs in the direction Y-Y: the operating position is reached by means of a movement along the direction Y-Y and, in detail, in approaching the bar 101, or the accessory 110, to the prismatic guide 102; the prismatic guide 102 is instead fixed and, therefore, constrained to the vehicle body.

Returning to the solution illustrated in figures 1-8, when the upper actuating portion 61 has reached the operating position, it is preferably positioned lying vertical, being entirely located inside the compartment 500. With reference to the solution illustrated in figures 9-14, when the upper actuating portion 61 has reached the operating position, it is preferably lying horizontal and is equally located inside the compartment 500.

Thereby, the upper actuating portion 61, a determining element for activating the clamping device, is closed and protected inside the compartment 500 so as to inhibit access by vandals or thieves.

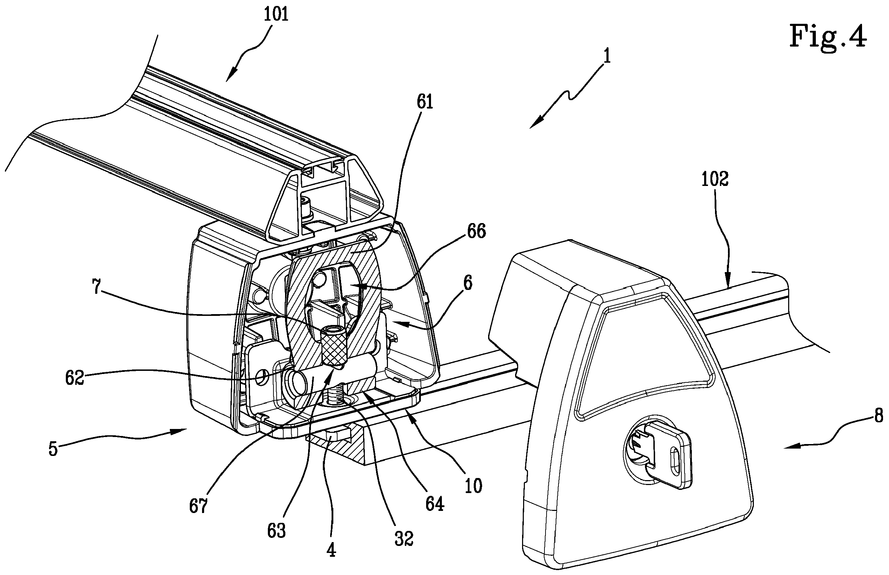

The actuating element 6, illustrated in greater detail in figures 1, 4 and 5, is defined, at the upper actuating portion 61 with a handle body 61 having a slotted portion 66. The connecting element 62, always illustrated in figures 1 and 4, is defined by a pin 67 having a cylindrical shape and defining the centre of rotation of the lower cam portion 64.

To complete the clamping element 1 there is further an adjustment bushing 7, coupled to the first end 31 of the bolt 2, adapted to impart a translation of the connecting element 62 towards the base surface 51 until the lower cam portion 64 comes into contact with the base surface 51.

By virtue of the adjustment bushing 7 and the translation imparted thereby, when the actuating element 6, in particular its lower cam portion 64, reaches the limit stop in contact with the base 51 and assumes its operating position, the following direct contacts are obtained:
- between adjustment bushing 7 and base surface 51;
- between base surface 51 and prismatic guide 102, to which the locking head 4 of the bolt 2 is coupled;
- between the locking head 4 and the inner walls of the prismatic guide 102, identified by the groove 103.

The adjustment bushing 7 therefore allows a preliminary adjustment of the actuating element 6 with respect to the auxiliary body 5 prior to the movement of the actuating element 6 from the rest position to the operating position. For this to happen, the actuating element 6 must be free to translate on the shank 3 of the bolt 2. Such a condition is implemented by including the through hole 63, obtained on the connecting element 62, with a diameter D greater than the diameter d of the shank 3 of the bolt 2. Thereby, the actuating element 6 is not only free to translate on the shank 3, but is also free to rotate around the first axis Y-Y of the bolt 2 and thus around the bolt itself.

That is, the actuating element 6 and in particular the connecting element 62 is coupled rotationally idle on the bolt 2 and in particular on the shank 3.

Therefore, the through hole 63 is useful to the coupling with the first free end 31 of the bolt 2: the coupling of the aforesaid elements is of the type with clearance and allows the connecting element 62 to slide freely along the shank 3 of the bolt 2 and, likewise, to rotate freely around the aforesaid shank.

This type of interaction between elements, fundamental for determining the positioning of the actuating element 6 and thus of the bar 101 or of the accessory 110 on the prismatic guide 102, is made possible by the difference between the diameter D of the through hole and the diameter d of the shank 3 of the bolt 2, the diameter D being necessarily greater, with respect to the diameter d of the shank 3, for the entire length of the shank 3.

Advantageously, the free sliding of the actuating element 6 along the shank 3 of the bolt 2, at the same time as the adjustment by means of the adjustment bushing 7, allows to obtain a fine control of the clamping operation. In fact, the adjustment bushing 7 allows the actuating element 6 to slide up to the optimal position in which to perform the clamping: thereby the handle body 61 of the actuating element 6 will find itself, at each point of the stroke along the shank 3, with the correct orientation to pass from the rest position to the operating position without touching, for example, the lateral surfaces 54 of the auxiliary body 5 and without being subject to the interference of other elements comprised in the clamping device such as two auxiliary struts belonging to the accessory 110.

In addition to the fine adjustment of the clamping operation, in a very advantageous manner, the presence of the adjustment bushing 7 allows to safeguard the integrity of the elements forming the fixing device: the adjustment bushing 7 brings the actuating element 6 closer to the base surface 51, up to a contact position, optimal position in which the lower cam portion 64 of the actuating element 6 can rotate around the axis determined by the connecting element 62; in a very intuitive manner, by virtue of the adjustment bushing 7, the clamping of the bar 101 to the prismatic guide 102 or of the accessory 110 to the prismatic guide 102 is ensured and the risk of exerting overly high clamping pressures is avoided. According to a preferred embodiment illustrated in the appended drawings, the shank 3 is preferably threaded and the adjustment bushing 7 is slidably coupled to the shank 3, along the first axis Y-Y, through a threaded coupling.

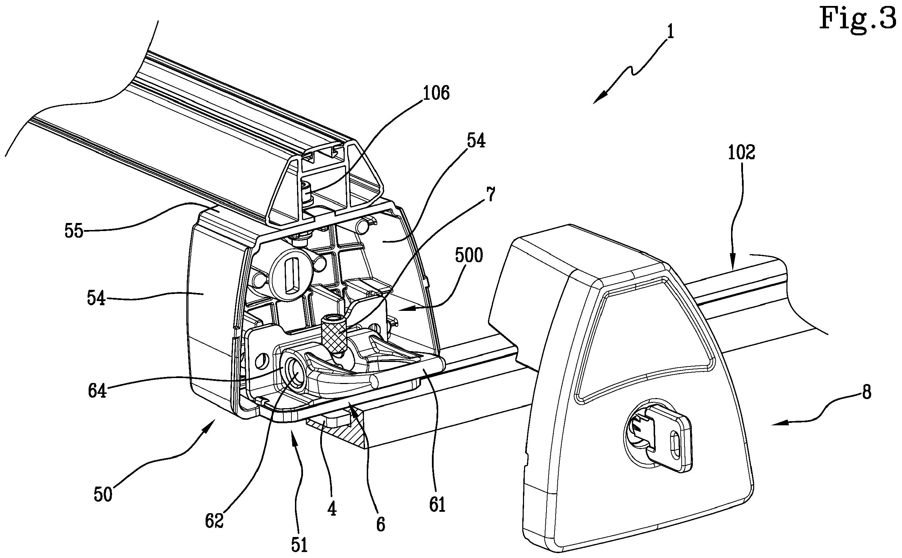

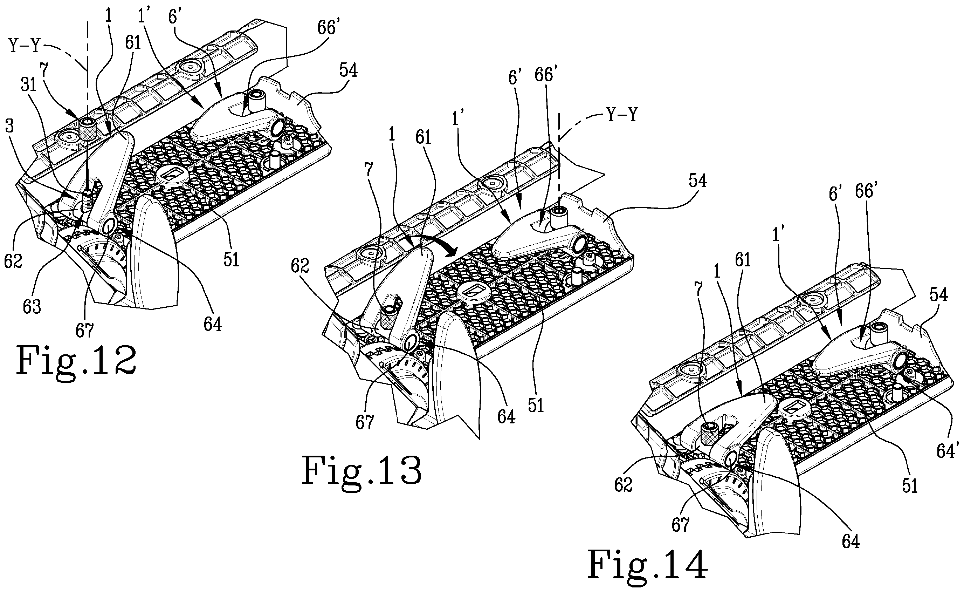

Therefore, the operation of the adjustment bushing 7 includes, prior to the activation of the actuating element 6, the screwing thereof on the bolt 2 until closing the connecting element 62 and the lower cam portion 64 together on the base surface 51 (operating transient illustrated in figure 3 and in figure 13).

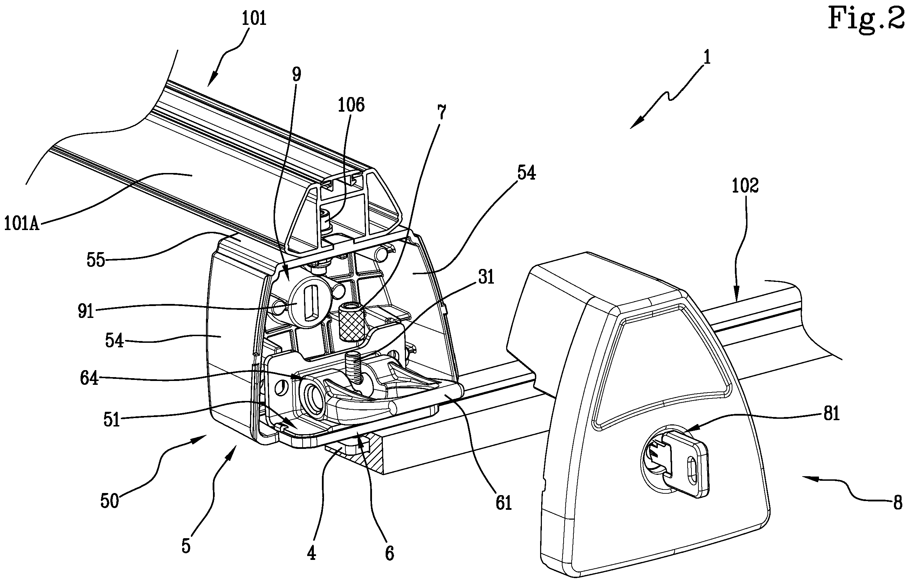

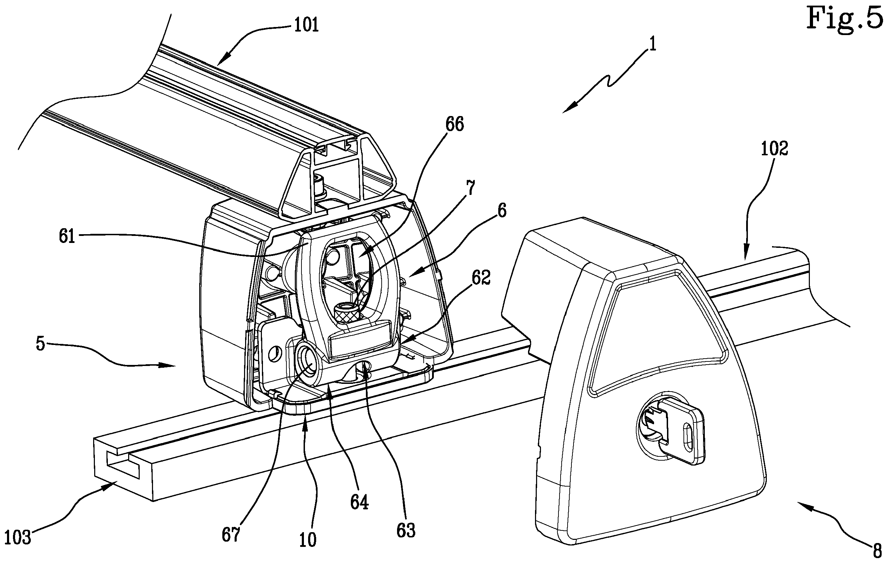

Comparing in particular figures 2 and 3, the closing action of the adjustment bushing 7 on the actuating element 6 together can be noted by the fact that the prismatic head 4 translates inside the groove 103 (in figure 2 the prismatic head 4 rests on the bottom of the groove 103, while in figure 3 the prismatic head is raised with respect to the bottom of the groove 103). Subsequently, the movement of the actuating element 6 is actuated, rotating the upper actuating portion 61, so as to reach the operating position from the rest position (operating transient illustrated in figures 4 and 5 and in figures 13 and 14).

In the operating position, the lower cam portion 64 activates an additional pressure, in addition to that provided by the bushing 7 on the connecting element 62, so as to clamp the auxiliary body 5 to the prismatic guide 102. The adjustment bushing 7, when coupled to the first end 31, is placed above the connecting element 62 and inside the slotted portion 66. With such placement, the adjustment bushing 7 can be accessible by a tool or by the operator's hand for screwing or unscrewing operations.

Once the bushing 7 has been adjusted and the actuating element 6 has been clamped, the two elements are enclosed and protected inside the auxiliary body 5 and in particular the shell 53 and the closing casing 8. The connection between the two is obtained as a result of a lock 9 having a barrel 91, accessible from the outside of the compartment 500 through a seat 81 obtained on the closing casing 8, and a cylindrical body 92, crossing the slotted portion 66, integral with the bottom surface 56 of the shell 53. The activation of the lock 9 allows the closing of the box-like body to protect the actuating element 6 from any undesired access. The invention then includes a connection system 100 for connecting at least one bar 101 to a vehicle or at least one accessory 110 to a prismatic guide 102.

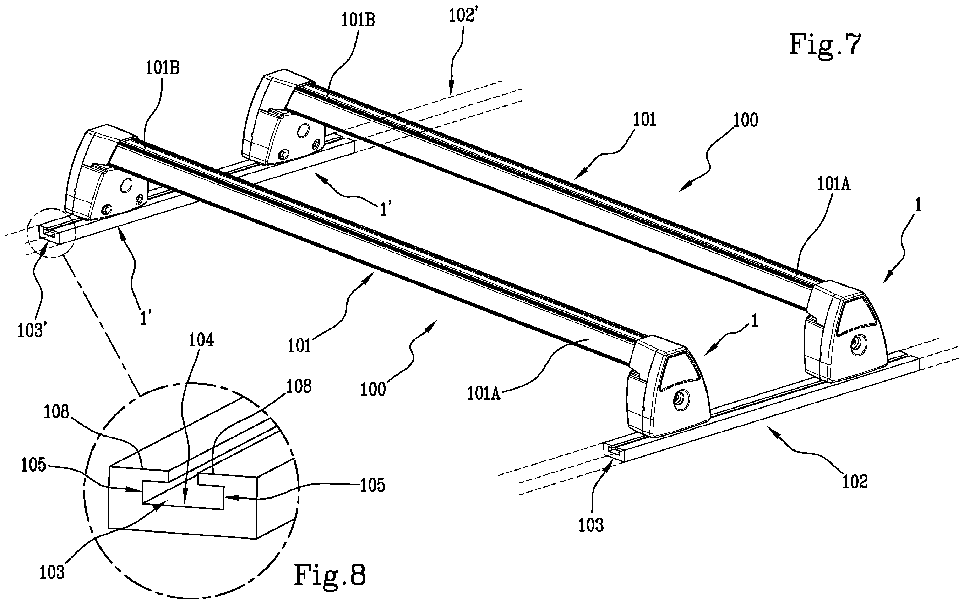

Figure 7 illustrates a system 100 which can be placed on the roof of a vehicle or on the cargo bed of a pick-up truck, figures 9-14 illustrate a system 100 for connecting an accessory 110 to a prismatic guide 102, the latter preferably being obtained inside the bar 101.

The connection system 100 for connecting a bar 101 to a vehicle will be described first.

The system comprises at least one bar 101 having an elongated profile ending with opposite ends 101A and 101B.

The bar 101 is couplable to the part of a vehicle as a result of a pair of prismatic guides 102, 102'. The pair of guides 102, 102' is connected to the vehicle so that one is parallel to the other. The bar 101 is connected to the pair of guides 102, 102' so that the bar 101 lies perpendicular to the pair of guides 102, 102'.

Each prismatic guide 102, 102' is defined by an extruded element having a groove 103, 103'. The groove 103 is defined by a bottom wall 104 from which a pair of lateral sides 105 extends. The pair of lateral sides is substantially parallel and opposite, defining a space therein made by the bottom wall 104.

For a more effective coupling between the prismatic guide 102 and locking head 4, a protruding wall 108 extends from each lateral side 105, extending from one lateral side 105 towards the adjacent lateral side 105. Thereby, the locking head 4 can slide inside the groove of the prismatic guide 102 but cannot translate perpendicularly to the direction of sliding due to the effect of the pair of protruding walls 108 which retain the locking head 4 from possible perpendicular translations.

The bar 101 is coupled to the pair of prismatic guides 102, 102' through a pair of clamping elements 1, 1'.

Each clamping element 1, 1' is connected to a respective end 101A, 101B and in a connection relation with a respective prismatic guide 102, 102'.

The coupling between bar 101 and clamping devices 1, 1' occurs through clamping screws 106. Said clamping screws 106 are protruding from the top surfaces 55 of each auxiliary body 5 and fitted in a pair of windows 107A and 107B obtained on the profile of the bar 101.

In fact, the bar 101 includes at least one pair of windows 107A and 107B, resulting spaced from each other and located at the opposite ends of the bar 101, near the ends 101A and 101B engageable by respective clamping elements.

To improve the adherence between the clamping device 1, 1' and the prismatic guide 102, 102', each base surface 51, at the side opposite that engageable by the lower portion of the cam 64, is covered by a sliding block 10 arranged to come into contact with the prismatic guide 102, 102'.

The system 100, illustrated in figures 9-14, is also used to lock an accessory 110 to a prismatic guide 102.

Therefore, the shape of the prismatic guide 102 is analogous to that described above and as indicated above can be included on the vehicle or inside a bar 101.

The accessory 110 includes a pair of clamping devices 1, 1' each having a respective actuating element 6 active on the auxiliary body 5, the latter being associated with the accessory 110.

In this configuration, the clamping devices 1, 1' allow the locking of the accessory 110 to a prismatic guide 102 obtained in the bar 101

In particular, each bolt 2 has the locking head 4 engaged within the prismatic guide 102 and the respective threaded shank crossing the auxiliary body 5, integrated in the accessory 110, and engaged above by a corresponding actuating element 6 and an adjustment bushing 7.

Once the accessory 110 has been coupled to the prismatic guide 102, by inserting the locking heads 4 inside the groove, it is possible to lock the same on the prismatic guide 102, actuating the clamping devices 1,1' or by first screwing the adjustment bushings 7 and subsequently rotating the actuating elements 6.

In the preferred embodiment of the connection system 100 illustrated in figures 9-14, there are a plurality of clamping devices: a first pair of clamping devices 1 is used to couple the bar 101 to prismatic guides 102 obtained directly on the vehicle and a second pair of clamping devices 1 is used to couple the accessory 110 to a further prismatic guide 102, the latter being obtained inside the bar 101.

The present invention reaches important advantages.

Firstly, the application of an adjustment bushing 7 allows to adjust the position of the lower cam portion 64 so that a correct clamping is ensured upon the closing thereof.

Secondly, the provision of an intermediate connecting element 62 coupled rotationally idle to the bolt 2 allows any rotations of the actuating element 6 so that, upon reaching the operating position, where the actuating element encounters obstacles to complete closure, by rotating the actuating element 6 with respect to the bolt 2 it is possible to correct the position of the actuating element to correctly complete the closure thereof.

## Claims

1. A clamping device (1) to promote the locking of a bar (101) to a vehicle or to promote the locking of an accessory (110) to a vehicle, said clamping device comprising:
- a bolt (2), having an extension along a first axis (Y-Y), having a shank (3) ending with a first free end (31) and with a second end (32) to which a locking head (4) is connected arranged to be coupled inside a prismatic guide (102); said prismatic guide (102) having a main extension along a second axis (X-X) and being provided with a groove (103) within which the locking head (4) is coupled; said locking head (4) being inhibited from rotating around the axis (Y-Y) due to the prismatic coupling between the head (4) and groove (103);
- an auxiliary body (5), connectable to a bar (101) or to an accessory (110), having a base surface (51), having a hole (52) crossed by the shank (3), said base surface (51) being lockable, upon actuation of the clamping device (1), to the prismatic guide (102);
- a movable actuating element (6), which is movable following a command given by an operator, from a rest position, in which the bolt (2) and auxiliary body (5) are in a contact relationship, to an operating position, in which the bolt (2) and auxiliary body (5) are locked together; said actuating element (6) comprising:
- an upper actuating portion (61), graspable by the operator, to bring the actuating element (6) from the rest position to the operating position and vice versa;
- a connecting element (62) integral with the upper actuating portion (61) and having a through hole (63) crossed by the shank (3);
- a lower cam portion (64) activatable on the base surface (52) and rotatable around the connecting element (62) to promote a clamping between the locking head (4) and auxiliary body (5) when the upper actuating portion (61) is brought into the operating position;
**characterised in that** it further comprises an adjustment bushing (7), coupled on the first end (31) of the bolt (2), adapted to impart a translation of the connecting element (62), and therewith of the actuating element (6), towards the base surface (51) of the auxiliary body (5) until reaching the contact between the lower cam portion (64) and the base surface (51); said adjustment bushing (7) allowing a preliminary adjustment of the position of the actuating element (6) with respect to the auxiliary body (5) prior to the movement of the actuating element (6) from the rest position to the operating position.

2. The clamping device (1) according to claim 1, wherein said through hole (63) has a diameter (D) greater than the diameter (d) of the shank (3) of the bolt (2) so as to allow a free rotation of the actuating element (6) around the first axis (Y-Y) of the bolt (2) and therefore around the bolt itself.

3. The clamping device (1) according to claim 1, wherein said shank (3) is threaded and said adjustment bushing (7) is slidably coupled to the shank (3), along the first axis (Y-Y), through a threaded coupling.

4. The clamping device (1) according to claim 1, wherein said adjustment bushing (7), prior to the activation of the actuating element (6), is screwed on the bolt (2) until closing together the connecting element (62) and the lower cam portion (64) on the base surface (51).

5. The clamping device (1) according to claim 1, wherein said upper actuating portion (61) is defined by a handle body (65) having a slotted portion (66); when moved from the rest position to the operating position and vice versa said actuating element (6) performs a rotation of at least 45°, preferably 90°, around the connecting element (62); said actuating element (6), when placed in the operating position, preferably having a vertical position.

6. The clamping device (1) according to claim 1, wherein said auxiliary body (5) is defined by a box-like body (50) comprising:
- a shell (53) defining a compartment (500) therein delimited at the rear by a bottom surface (56), below by the base surface (51), laterally by a pair of side walls (54), extending away from the base surface (51), and above by a top surface (55); connecting the pair of side walls (54); said compartment (500) acting as a seat for housing the actuating element (6) when the latter is placed in the operating position;
- a closing casing (8), preferably having a shape counter-shaped to the shell (53), couplable to the shell (53) to close the compartment (500) and protect the actuating element (6) when placed inside the compartment (500).

7. The clamping device according to claims 5 and 6, wherein said actuating element (6), when moving from the rest position to the operating position, rotates around the connecting element (62), from a substantially horizontal or sub-vertical position to a vertical position; said actuating element (6), when placed in the vertical position, being entirely contained inside the compartment (500).

8. The clamping device according to claims 5 and 6, wherein said shell (53) and said closing casing (8) are connected to each other by a lock (9) having a barrel (91), accessible from the outside of the compartment (500) through a seat (81) obtained on the closing casing (8) and a cylindrical body (92) integral with the bottom surface (56) of the shell (53); said lock (9) closing the box-like body (50) to protect the actuating element (6) from any undesired access; said cylindrical body (92) crossing the slotted portion (66) when the actuating element (6) is in the operating position.

9. The clamping device (1) according to claim 5, wherein said adjustment bushing (7), when coupled to the first end (31), is placed above the connecting element (62) and inside the slotted portion (66); said adjustment bushing (7) being accessible by the fingers of an operator and by a tool for screwing or unscrewing operations.

10. The clamping device (1) according to claim 1, wherein said connecting element (62) is defined by a pin (67) having a cylindrical shape and defining the centre of rotation of the lower cam portion (64).

11. A system (100) for connecting at least one bar (101) to the roof of a vehicle or on the lateral sides of a cargo bed of a pick-up truck; said connection system (100) comprising:
- a bar (101) having an elongated profile ending with two bent opposite ends (101A, 101B);
- a pair of prismatic guides (102, 102') connected to the vehicle so as to be substantially parallel to each other; each prismatic guide (102, 102') having a respective groove (103,103') each defined by a bottom wall (104, 104') and by a pair of lateral sides (105, 105');
- a pair of clamping devices (1, 1'), according to one of claims 1 to 10, connected to the bent ends (101A, 101B) of the bar (101) and being in connection relation with the pair of prismatic guides (102, 102') so that each clamping device (1,1') is connected to a respective prismatic guide (102, 102'); each clamping device (1,1') having the respective locking head (4, 4') slidably coupled inside the corresponding prismatic guide (102,102');

12. The connection system (100) according to claim 11, wherein said bar (101) has at least one pair of windows (107A, 107B) obtained on the profile of the bar (101); a window (107A) being in an opposite position and spaced from the reciprocal window (107B); said bar (101) being engageable to the pair of clamping devices (1,1') due to clamping screws (106), protruding from the top surfaces (55) of each auxiliary body (5,5'), engageable in the pair of windows (107A, 107B).

13. The connection system (100) according to claim 11, wherein each base surface (51), belonging to a respective auxiliary body (5,5'), at the side opposite to that engageable by the lower cam portion (64), is covered by a sliding block (10), arranged to come into contact with the prismatic guide (102, 102') to increase the adherence between the clamping device (1,1') and the prismatic guide (102, 102').

14. The connection system (100), for connecting an accessory (110) to a vehicle, of the type comprising:
- at least one prismatic guide (102) connected to the vehicle and having a groove (103) defined by a bottom wall (104) and a pair of lateral sides (105);
- a pair of clamping devices (1,1'), according to one of claims 1 to 10, connected below to the prismatic guide (102), through a respective locking head (4,4') slidingly coupled inside the prismatic guide (102), and engageable above to the auxiliary body (5); said pair of clamping devices (1.1') promoting a stable coupling of the accessory (110) to the prismatic guide (102) following the activation of the respective adjustment bushings (7.7') and the respective actuating elements (6.6').

15. The connection system (100) according to claim 14, wherein said prismatic guide (102) being obtained inside a bar (101) engageable to the vehicle.
